# EUROPÄISCHE PATENTSCHRIFT

(11) **EP 2 128 725 B1**
(45) Veröffentlichungstag und Bekanntmachung des Hinweises auf die Patenterteilung: **29.06.2011**
(21) Anmeldenummer: 08009727.2
(22) Anmeldetag: 28.05.2008
(51) Int. Cl.: G05B 19/042

(54) **Verfahren zur Zuteilung von Speicher in einem Pufferspeicher**
Method for allocating memory in a buffer store
Procédé de répartition de mémoires dans une mémoire tampon

(43) Veröffentlichungstag der Anmeldung: 02.12.2009
(73) Patentinhaber: SIEMENS AKTIENGESELLSCHAFT, 80333 München (DE)
(72) Erfinder: Weber, Karl Dr., 90518 Altdorf (DE)

(56) Entgegenhaltungen:
- WO-A-2008/008662
- DE-A1- 10 048 747

## Beschreibung

Die vorliegende Erfindung betrifft ein Verfahren zur Zuteilung eines zumindest drei Puffer umfassenden Pufferspeichers einer Baugruppe, insbesondere eine zur Verwendung bei der Automatisierung technischer Prozesse vorgesehene Baugruppe, mit einer Verarbeitungseinheit und einem Busanschluss. Eine derartige Baugruppe ist bei einer Steuerung und/oder Überwachung technischer Prozesse zum Datenaustausch zwischen dabei verwendeten Applikationen und der Kommunikationsinfrastruktur vorgesehen. Für einen derartigen Datenaustausch müssen Ressourcen zur Verfügung gestellt werden, die einen schnellen und konsistenten Zugriff erlauben, ohne dass die Applikation blockiert wird. Als Applikation wird im Folgenden eine auf der Baugruppe vorgesehene Verarbeitungseinheit beschrieben, die z. B. ein Prozessor ist oder die Funktionalität eines Prozessors bereitstellt und entsprechend zur Ausführung einer Applikation, also einer Automatisierungslösung, bestimmt und geeignet ist.

Bei der Baugruppe handelt es sich bevorzugt um eine so genannte dezentrale Peripheriebaugruppe, nachdem in der Automatisierungstechnik mehr und mehr dezentrale Systeme Verwendung finden, die untereinander mittels der jeweiligen Kommunikationsinfrastruktur, also z. B. einem Bus, insbesondere einem Feldbus, kommunikativ verbunden sind. Von den dezentralen Peripheriebaugruppen werden in an sich bekannter Art und Weise Eingangssignale vom jeweiligen technischen Prozess eingelesen und lokal verarbeitet oder vorverarbeitet und zumindest teilweise an eine übergeordnete Einheit, z. B. eine Zentraleinheit einer speicherprogrammierbaren Steuerung, einen Leitrechner oder dergleichen, übermittelt. Die übergeordnete Einheit verarbeitet dann die erhaltenen Eingangssignale und ermittelt aus den Eingangssignalen, ggf. unter Verwendung weiterer zentraleinheitsinterner Werte Ausgangssignale, welche dann erneut über die Kommunikationsinfrastruktur an einzelne oder alle dezentralen Peripheriebaugruppen übermittelt werden. Die Beeinflussung des technischen Prozesses erfolgt dann indem die oder einzelne Peripheriebaugruppen die auf diesem Wege erhaltenen Ausgangssignale an den jeweiligen technischen Prozess ausgeben und damit im Prozess befindliche Aktoren, z. B. Motore, Ventile, usw. beeinflussen.

Das Einlesen der Eingangssignale vom technischen Prozess und das Ausgeben der Ausgangssignale an den technischen Prozess erfolgt in einer Peripheriebaugruppe mittels der davon umfassten verarbeitungseinheit innerhalb einer so genannten Zykluszeit. Diese Zykluszeit ist normalerweise deutlich verschieden von einer Zeit, die zwischen zwei Zugriffsperioden der übergeordneten Einheit auf die jeweilige Peripheriebaugruppe vergeht. Die Ein- und Ausgangssignale können daher nicht sofort weitergeleitet oder verarbeitet werden, sondern müssen in der Peripheriebaugruppe zwischengespeichert werden. Aus der EP 0 843 843 B1 ist dazu eine Pufferschaltung bekannt, bei der eine von der dort beschriebenen Peripheriebaugruppe umfasste Verarbeitungseinheit einerseits und ein Busanschluss andererseits in einem Pufferspeicher einen von drei Speicherbereichen (Puffer) belegen, so dass zu jedem Zeitpunkt für Verarbeitungseinheit und Busanschluss garantiert ein Puffer in dem Pufferspeicher zur Verfügung steht, in den neue Daten eingeschrieben werden können, ohne unmittelbar zuvor geschriebene Daten zu überschreiben. Es hat sich jedoch herausgestellt, dass eine mit dem Ansatz in der zuvor genannten EP 0 843 843 B1 einhergehende feste Beziehung jeweils zweier Puffer zu den beiden Kommunikationsinstanzen, also Verarbeitungseinheit einerseits und Busanschluss andererseits, hinsichtlich seiner Flexibilität noch verbesserungsfähig ist.

Entsprechend besteht eine Aufgabe der vorliegenden Erfindung ausgehend von der EP 0 843 843 B1 darin, ein Verfahren zur Zuteilung eines mindestens drei Puffer umfassenden Pufferspeichers einer Baugruppe mit einer Verarbeitungseinheit und einem Busanschluss vorzuschlagen, bei dem die Belegung jeweils einer der drei Puffer eine verbesserte Flexibilität ermöglicht.

Diese Aufgabe wird mit einem Verfahren wie es in Anspruch 1 definiert ist gelöst. Dazu ist einem Verfahren zur Zuteilung eines mindestens drei Puffer umfassenden Pufferspeichers einer Baugruppe mit einer Verarbeitungseinheit und einem Busanschluss, wobei die Baugruppe über den Busanschluss Daten sendet oder empfängt sowie durch die Verarbeitungseinheit Daten zum Senden über den Busanschluss generiert und über den Busanschluss empfangene Daten verarbeitet, mithin also Busanschluss einerseits und Verarbeitungseinheit andererseits als Produzent bzw. Konsument in einer über den Pufferspeicher abgewickelten Kommunikationsbeziehung fungieren, vorgesehen, dass jeder Puffer einen von vier Stati, nämlich "Eingangsbereich lokal", "lokal", "Eingangsbereich extern" und "extern", annehmen kann und dass entweder Busanschluss oder Verarbeitungseinheit - im Folgenden jeweils auch als "Einheit" bezeichnet - versuchen, einen der drei Puffer durch folgende Strategie zu belegen: Wenn bereits einer der drei Puffer zugeteilt ist, wird dieser Puffer verwendet, ansonsten wird einer derjenigen Puffer, die den Status "Eingangsbereich extern" (im Falle einer Belegung durch den Busanschluss) bzw. "Eingangsbereich lokal" (im Falle einer Belegung durch die Verarbeitungseinheit) haben, verwendet und dem betreffenden Puffer dazu der Zustand "extern" bzw. "lokal" zugewiesen. Dabei kann es - im Gegensatz zu der Situation bei der EP 0 843 843 B1, bei der immer einer der Puffer dem Busanschluss und ein weiterer Puffer der Verarbeitungseinheit zugeordnet ist - auch vorkommen, dass dem Busanschluss oder der Verarbeitungseinheit oder sogar dem Busanschluss und der Verarbeitungseinheit temporär kein Puffer zugewiesen ist.

Die Stati "lokal" und "extern" entsprechen, ohne dass in der EP 0 843 843 B1 eine derartige Statusverwaltung angesprochen wäre, in etwa der Belegungsstrategie wie sie im erwähnten Stand der Technik verfolgt wird. Sobald dort entweder die Verarbeitungseinheit oder der Busanschluss einen der Puffer des dortigen Pufferspeichers belegt, können diese als einen derartigen Status angenommen habend aufgefasst werden. Der nicht belegte Pufferspeicher hat einen Zwischenstatus, der z. B. als "frei" bezeichnet werden könnte. Statusübergänge sind demnach von "lokal" oder "extern" nach "frei" und von "frei" nach "lokal" oder "extern" möglich.

Bei der Erfindung werden zusätzliche Stati verwendet und Verarbeitungseinheit und Busanschluss belegen jeweils einen der Puffer des Pufferspeichers nur im Bedarfsfall, während bei der EP 0 843 843 B1 Verarbeitungseinheit und Busanschluss stets einen der drei Puffer belegen. Die Verwendung der Pufferspeicher erfolgt zyklisch grundsätzlich derart, dass zunächst z. B. die Verarbeitungseinheit den jeweiligen Puffer verwendet, dieser dann vom Busanschluss verwendet wird und danach erneut von der Verarbeitungseinheit, und so weiter. Bevor entweder Verarbeitungseinheit oder Busanschluss dazu kommen, einen Puffer zu belegen, kann es sich ergeben, dass ein oder mehrere Puffer für die Verwendung durch entweder Verarbeitungseinheit oder Busanschluss frei werden. Solche Puffer werden quasi einem "Eingangsbereich" der jeweiligen Einheit zugeordnet und nachdem sich selbstverständlich deren räumliche Anordnung nicht ändern kann wird dies durch einen entsprechenden Status, also "Eingangsbereich lokal" oder "Eingangsbereich extern", kenntlich gemacht. Aus dem jeweiligen Eingangsbereich kann sich die jeweilige Einheit "bedienen". Nur wenn kein Puffer dem jeweiligen Eingangsbereich durch entsprechende Statusvergabe zugewiesen ist, müssen Ausnahmebehandlungen ansetzen, etwa derart, dass aus dem Eingangsbereich der komplementären Einheit, also ein von dieser noch nicht be- oder verarbeiteter Puffer, erneut belegt wird und damit quasi zurückgeholt wird.

Das beschriebene und nachfolgend weiter erläuterte Verfahren ist bevorzugt in Software implementiert. Entsprechend betrifft die Erfindung auch ein Computerprogramm zur Ausführung eines derartigen Verfahrens, das Computerprogrammanweisungen zur Implementierung der einzelnen Verfahrensschritte oder Verfahrensschrittfolgen umfasst, einen Datenträger mit einem solchen Computerprogramm und ein Computersystem, auf dem ein derartiges Computerprogramm geladen ist, also z. B. eine Baugruppe der eingangs beschriebenen Art, insbesondere eine so genannte dezentrale Peripheriebaugruppe, oder einen von der Baugruppe umfassten Pufferspeicher mit einer Pufferspeicherzuteilungslogik deren Funktionalität hier und im Folgenden im Detail beschrieben wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Es hat sich gezeigt, dass es ausreichend ist, wenn genau ein Puffer den Zustand "lokal", genau ein Puffer den Zustand "extern" und maximal drei Puffer den Zustand "Eingangsbereich lokal" und ebenfalls maximal drei Puffer den Zustand "Eingangsbereich extern" annehmen können. Eine solche Lösung kann außerdem ohne Anpassungen der in der EP 0 843 843 B1 beschriebenen Hardware, also mit den dort bereits vorgesehenen drei Puffern, eingesetzt und insoweit nahtlos für bereits bestehende Automatisierungslösungen mit der dortigen Kommunikationsinfrastruktur und den damit verwendeten Peripheriegeräten verwendet werden.

Im Anschluss an eine Belegung eines der drei Puffer durch entweder Busanschluss oder Verarbeitungseinheit wird dem betreffenden Puffer der Zustand "Eingangsbereich lokal", im Falle einer "externen" Belegung durch den Busanschluss bzw. "Eingangsbereich extern", im Falle einer "lokalen" Belegung durch die Verarbeitungseinheit, zugewiesen und damit die Weitergabe in den Eingangsbereich der komplementären Einheit erreicht.

Bevorzugt wird bei einer Verwendung eines Puffers, der den Status "Eingangsbereich extern" oder "Eingangsbereich lokal" hat, im Falle einer Mehrzahl verwendbarer Puffer mit diesem Status, derjenige Puffer verwendet, der diesen Status am längsten innehat. Auf diese Art und Weise wird gewährleistet, dass Daten, die in den jeweiligen Puffern von einer Einheit zur anderen weitergegeben werden, entsprechend eines Zeitpunkts ihres Erhalts oder ihrer Erzeugung verarbeitet werden.

Zum bereits erwähnten "Zurückholen" von Puffern ist vorteilhaft vorgesehen, dass Busanschluss oder Verarbeitungseinheit, wenn für den Busanschluss kein Puffer mit dem Status "Eingangsbereich extern" und die Verarbeitungseinheit kein Puffer mit dem Status "Eingangsbereich lokal" zur Verfügung steht, einen Puffer mit dem Status "Eingangsbereich lokal" bzw. "Eingangsbereich extern" belegen und zwar dort denjenigen Puffer, der diesen Status die kürzeste Zeit innehat. Dadurch wird sichergestellt, dass zumindest für Produzent oder Konsument ein Puffer verfügbar gemacht werden kann, wobei die erneute Verwendung eines bereits benutzten Puffers dadurch besonders gut vertretbar wird, dass der zuletzt verwendete Puffer, also der Puffer, der den jeweiligen Status die kürzeste Zeit innehat, zurückgeholt/erneut verwendet wird.

Zur Erkennung, welcher Puffer einen bestimmten Status am längsten innehat, ist zur Verwaltung der maximal drei Puffer mit dem Status "Eingangsbereich lokal" oder "Eingangsbereich extern" eine Datenstruktur vorgesehen, mit der eine solche Dauer durch eine Position in der Datenstruktur kodierbar ist. Beispiele für derartige Datenstrukturen sind Felder, also z. B. statische Datenstrukturen nach Art eines so genannten "Arrays" oder dynamische Datenstrukturen nach Art einer Liste, insbesondere einfach oder doppelt verkettete Listen. Analog zur Priorisierung einer Verwendung eines Puffers entsprechend einer Dauer, während derer der betreffende Puffer einen bestimmten Status innehat, ist vorgesehen, dass im Anschluss an die Belegung eines Puffers durch entweder Busanschaltung oder Verarbeitungseinheit dem betreffenden Puffer der Zustand "Eingangsbereich lokal" bzw. "Eingangsbereich extern" zugewiesen und in der Datenstruktur an einer letzten freien Position eingetragen wird, so dass sich auch hier die Korrelation zwischen Dauer des jeweiligen Status und Position in der Datenstruktur ergibt. Alternativ ist auch möglich, die bisher beschriebenen vier Zustände auf z.B. acht Zustände zu erweitern, wobei sich die Erhöhung der Anzahl der Zustände durch eine feinere Formulierung der beiden Basiszustände "Eingangsbereich lokal" und "Eingangsbereich extern" z.B. als "Eingangsbereich lokal 1", "Eingangsbereich lokal 2", "Eingangsbereich lokal 3" und "Eingangsbereich extern 1", "Eingangsbereich extern 2" sowie "Eingangsbereich extern 3" ergibt. Bei mehr als drei Puffern ergäbe sich dann - ausgehend von den stets vorgesehenen vier Basiszuständen - eine entsprechend erhöhte Anzahl von Einzelzuständen. Bei einer solchen feineren Formulierung der Basiszustände kann auf eine für die Kodierung der Dauer eines bestimmten Zustands verwendbare Datenstruktur (wie oben beschrieben) verzichtet werden, und z. B. demjenigen Puffer, der am längsten dem "Eingangsbereich lokal" zugeordnet ist, der Status "Eingangsbereich lokal 3" zugewiesen werden, während ein Status "Eingangsbereich lokal 2" einen Puffer kennzeichnet, der am zweitlängsten dem "Eingangsbereich lokal" zugeordnet ist, usw. Ob die vorgesehene Zuordnung in der Weise erfolgt, dass den Puffern einer der Zustände (Basiszustand oder feinere Formulierung eines Basiszustands) zugeordnet ist oder den Zuständen ein Puffer zugeordnet ist, ist unerheblich und insgesamt gleichwertig.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Auto- matisierungssystems zur Steuerung eines technischen Prozesses mit von dem Automatisierungssystem umfass- ten dezentralen Peripheriegeräten, die als zuteilbare Ressourcen beim Datenaustausch in dem Automatisie- rungssystem einen Pufferspeicher mit einer Mehrzahl darin gebildeter Puffer umfasst,
- FIG 2: einen Ausschnitt aus dem Automatisierungssystem mit einer Vielzahl von an ein als Switch fungierendes Pe- ripheriegerät angeschlossenen Peripheriegeräten,
- FIG 3: einen sich bei endlicher Weiterleitungszeit in einem Switch, wie in FIG 2 dargestellt, ergebenden zeitli- chen Versatz bei der Weiterleitung von Daten in dem Automatisierungssystem,
- FIG 4: den Pufferspeicher mit den darin gebildeten Puffern und eine schematische Darstellung zu deren Belegung und Verwendung und
- FIG 5-6: Momentaufnahmen bei der Verwendung des Pufferspei- chers.

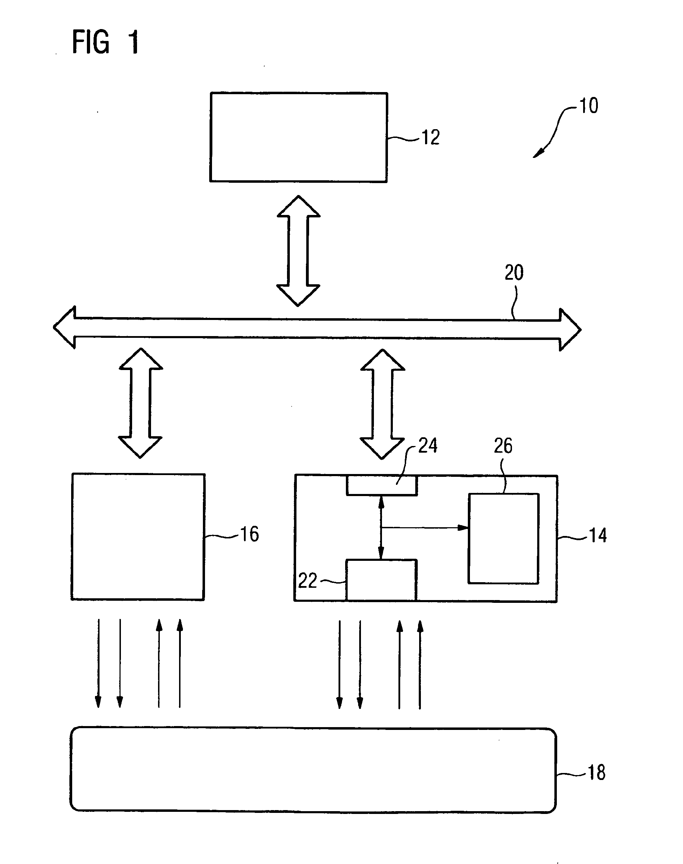

FIG 1 zeigt ein insgesamt mit 10 bezeichnetes und nur schematisch dargestelltes Automatisierungssystem, das eine übergeordnete Einheit 12, also z. B. eine Zentraleinheit einer speicherprogrammierbaren Steuerung, und ein oder mehrere, ansonsten auch als Baugruppe bezeichnete Peripheriegeräte 14, 16 umfasst. Das Automatisierungssystem 10 ist zur Steuerung und/oder Überwachung eines nicht näher dargestellten technischen Prozesses 18 vorgesehen. Dazu tauschen insbesondere die Peripheriegeräte 14-16 Daten mit dem technischen Prozess 18 aus, z. B. indem in an sich bekannter Art und Weise Sensorsignale von im technischen Prozess 18 vorgesehenen Sensoren, als z. B. Endschaltern, Messwertaufnehmern, usw., als Eingangssignale aufgenommen und Ausgangssignale an im technischen Prozess 18 befindliche Aktoren, also z. B. Motoren, Ventile, usw., abgegeben werden.

Die Einheiten des Automatisierungssystems 10, also eine oder mehrere übergeordnete Einheiten 12 und das oder jedes Peripheriegerät 14-16, sind kommunikativ über eine dazu vorgesehene Kommunikationsinfrastruktur verbunden, z. B. einen Bus, insbesondere einen so genannten Feldbus 20, der hier nur stark schematisch vereinfacht im Hinblick auf den möglichen Datenfluss dargestellt ist.

Von den Peripheriegeräten 14-16 ist nur eines mit weiteren Details dargestellt. Grundsätzlich haben alle Peripheriegeräte 14-16 einen gleichen oder zumindest vergleichbaren Aufbau, soweit sie zur Teilnahme an dem Verfahren gemäß der Erfindung vorgesehen sind. Das Automatisierungssystem 10 kann also durchaus auch Peripheriegeräte umfassen, bei denen der Datenaustausch z. B. nach dem in der EP 0 843 843 B1 beschriebenen Ansatz abgewickelt wird. Als Details eines Peripheriegeräts 14-16 sind in FIG 1 eine Verarbeitungseinheit 22, ein Busanschluss 24 und ein Pufferspeicher 26 gezeigt.

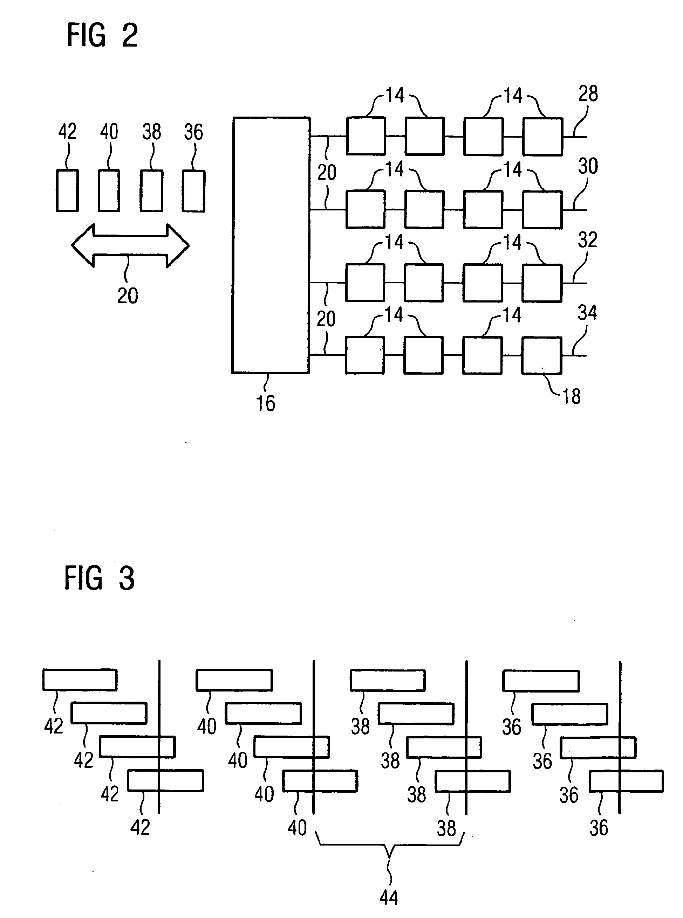

FIG 2 zeigt schematisch vereinfacht ein Detail des Automatisierungssystems 10 gemäß FIG 1, wobei insbesondere dargestellt ist, dass ein solches Automatisierungssystem üblicherweise eine Vielzahl von Peripheriegeräten 14 umfasst. Konkret ist in FIG 2 gezeigt, dass das Automatisierungssystem 10 zumindest ein als Switch oder Router fungierendes Peripheriegerät 16 umfasst, an das in vier zum Feldbus 20 gehörenden Strängen 28, 30, 32, 34 eine Mehrzahl von Peripheriebaugruppen 14 angeschlossen ist. Auf einer Eingangsseite des als Switch fungierenden Peripheriegeräts 16 ist schematisch vereinfacht gezeigt, dass über den Feldbus 20 transferierte Daten paketweise übermittelt werden, was in FIG 2 durch vier so genannte Frames 36, 38, 40, 42 veranschaulicht ist. Zur Verteilung der davon umfassten Daten im Automatisierungssystem 10 (FIG 1) werden die Frames 36-42 von dem als Switch fungierenden Peripheriegerät 16 in endlicher Zeit nacheinander in die einzelnen Stränge 28-34 gegeben und von den dort angeschlossenen Peripheriegeräten 14 empfangen.

FIG 3 zeigt dazu eine Momentaufnahme bei einer Übermittlung der Frames 36-42 in den Strängen 28-34 (FIG 2), wobei die zeilenartige Anordnung der Frames 36-42 in FIG 3 den in FIG 2 dargestellten Strängen 28-34 entsprechen soll. Die eingezeichneten vertikalen Linien sollen den Beginn und das Ende einer Zykluszeit 44 einer z. B. durch die übergeordnete Einheit 12 (FIG 1) ausgeführten Automatisierungslösung veranschaulichen. In FIG 3 ist dabei ersichtlich, dass, nachdem das als Switch fungierende Peripheriegerät 16 die Frames 36-42 nur in endlicher Zeit in die einzelnen Stränge 28-34 weiterleiten kann, sich ein Zeitversatz hinsichtlich der Verfügbarkeit der von den Frames 26-42 umfassten Daten in den einzelnen Peripheriegeräten 14 ergibt. Dies kann dazu führen, dass einzelne Peripheriegeräte 14 einen Frame 36-42, den andere Peripheriegeräte 14 erst in einem darauf folgenden Buszyklus 44 empfangen, bereits erhalten haben. Dies führt dazu, dass eine Synchronizität der bei den Peripheriegeräten 14 vorliegenden Daten oder der von den Peripheriegeräten 14 gelieferten Daten nicht gewährleistet werden kann. Eine Möglichkeit zur Vermeiden dieses Effektes ist eine Verlängerung der Zykluszeit 44, derart, dass für sämtliche angeschlossenen Peripheriegeräte 14 sichergestellt werden kann, dass die von einem Frame 36-42 umfassten Daten während des gleichen Buszyklusses 44 vollständig empfangen werden. Dies ist aber in nachteiliger Weise mit einer unter Umständen erheblichen Verlängerung des Buszyklusses verbunden, was z. B. bei Regelungsvorgängen dazu führen kann, dass nur eine reduzierte Anzahl von Istwerten aufgenommen werden kann und darunter wiederum die Genauigkeit des Regelungsvorgangs leidet. Mit der Erfindung wird nun möglich, dass bei sämtlichen Peripheriebaugruppen die dort aufgrund empfangener Frames 36-42 eingehenden Daten so zwischengespeichert werden, dass deren synchrone Verarbeitung möglich ist, ohne dass z. B. noch nicht ausgewertete Daten durch neuere Daten überschrieben werden und damit ein zwar veralteter aber dennoch die Dynamik eines Regelungsvorgangs beschreibender Messwert nicht ausgewertet wird.

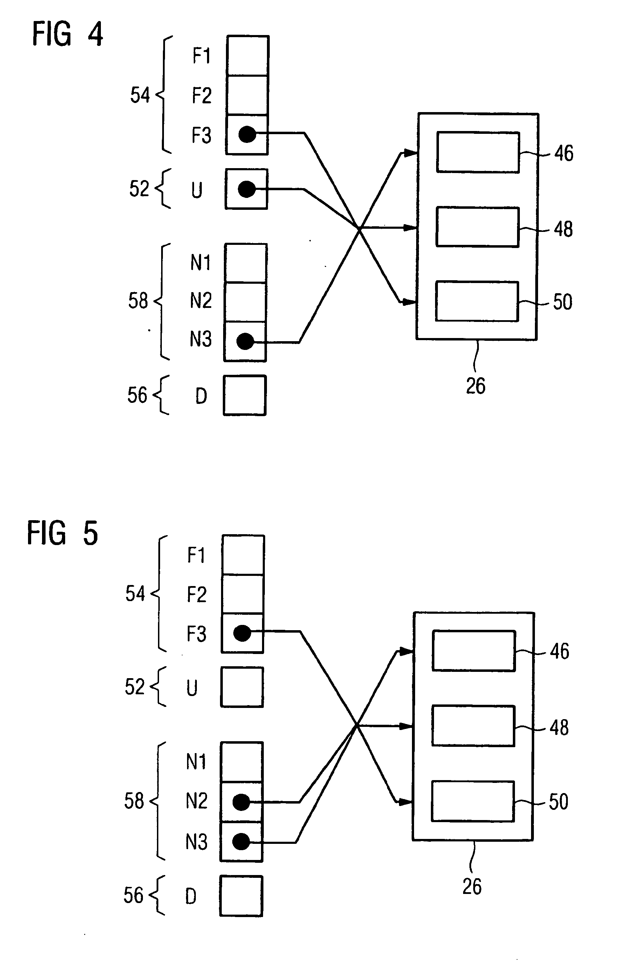

FIG 4 zeigt dazu den von einem Peripheriegerät 14-16 (FIG 1) umfassten Pufferspeicher 26 mit mindestens drei darin gebildeten Puffern 46, 48, 50. Die Puffer 46-50 stehen zur Belegung durch entweder Busanschluss 24 oder Verarbeitungseinheit 22 zur Verfügung. Die Verarbeitungseinheit 22 wird im Folgenden als "baugruppenlokal" aufgefasst und entsprechend werden Stati, die einen der Puffer 46-50 als durch die Verarbeitungseinheit 22 verwendet oder für die Verarbeitungseinheit 22 verwendbar kennzeichnen, als "lokal" bzw. "Eingangsbereich lokal" bezeichnet und dazu zur Referenzierung in den Figuren die Bezugszeichen 52 und 54 verendet. Im Gegensatz dazu wird der Busanschluss 24, nachdem entweder externe Daten empfangen werden oder Daten nach extern übermittelt werden, zur Unterscheidung als "baugruppenextern" aufgefasst und Stati, die einzelne Pufferspeicher 46-50 als durch den Busanschluss 24 verwendet oder für den Busanschluss 24 verwendbar kennzeichnen, als "extern" bzw. "Eingangsbereich extern" bezeichnet und dazu zur Referenzierung in den Figuren die Bezugszeichen 52 und 54 verwendet.

FIG 4 zeigt dazu eine mögliche Konfiguration, bei der die Verarbeitungseinheit 22 einen Puffer 46-50 belegt hat (Status: "lokal" 52), ein weiterer Puffer 46-50 für die Verarbeitungseinheit 22 verwendbar ist (Status: "Eingangsbereich lokal" 54) und ein weiterer Puffer 46-50 für den Busanschluss 24 verwendbar ist (Status: "Eingangsbereich extern" 58). Es ist grundsätzlich nicht von Belang, welcher der drei Puffer 46-50 jeweils verwendet wird, jedoch ist selbstverständlich die exklusive Verwendung jeweils eines Puffers 46-50 essentiell.

Sobald z. B. die Verarbeitungseinheit 22 die Belegung des verwendeten Puffers 46-50 aufgibt, wechselt der betreffende Puffer seinen Status vom vorherigen Status "lokal" 52 zum neuen Status "Eingangsbereich extern" 58, der Puffer wandert also gleichsam in den "Einflussbereich" der Busanschaltung 24. Wenn die Busanschaltung 24 (ausgehend von der Darstellung in FIG 4) den dort bereits zur Verwendung durch die Busanschaltung 24 markierten Puffer 46-50 nicht belegt hat, stehen nach diesem Schritt für die Busanschaltung 24 zwei Puffer 46-50 zur Verfügung. FIG 5 zeigt die sich danach ergebende Konfiguration.

Zu einem bestimmten Zeitpunkt wird der Busanschluss 24 einen der Puffer 46-50 belegen und wählt dazu einen Puffer 46-50 aus, dem der Status "Eingangsbereich extern" 58 zugewiesen ist. Bei dieser Auswahl wird normalerweise derjenige Puffer bevorzugt, der diesen Status am längsten innehat. In Ausnahmefällen, z.B. wenn der "Eingangsbereich extern" leer ist, also keiner der Puffer einen Status aufweist, der ihn als dem "Eingangsbereich extern" zugehörig ausweist, wird der letzte in den Eingangsbereich eingetragene Puffer genommen. Am einfachsten ist eine Kodierung der Dauer, während derer ein Puffer 46-50 einen bestimmten Status innehat und eine darauf basierende Auswahl möglich, wenn zur Verwaltung der jeweiligen Zustände eine Datenstruktur verwendet wird, mit der derartige Aspekte kodierbar sind, also z. B. ein Feld, eine Liste oder dergleichen, wobei FIG 4 und FIG 5 bereits versuchen, den Feldaspekt einer solchen Datenstruktur für den "Eingangsbereich lokal" 54 und "Eingangsbereich extern" 58 graphisch darzustellen, oder durch eine feinere Formulierung diese beiden Basiszustände, wobei die graphische Darstellung ebenfalls als eine derartige feinere Formulierung aufgefasst werden kann.

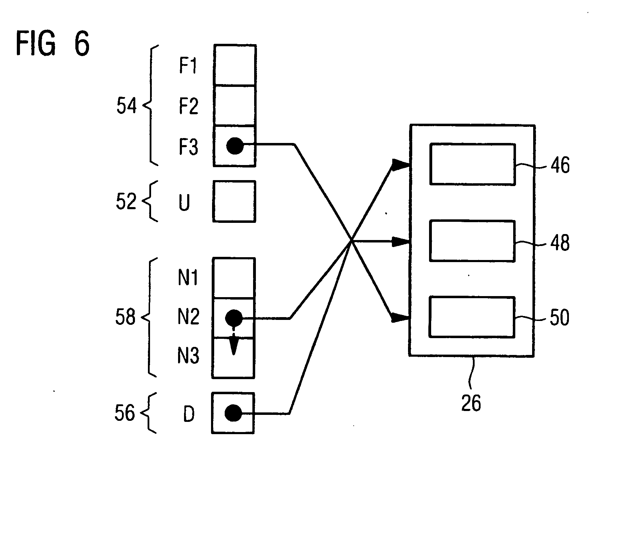

Nach Auswahl eines Puffers 46-50 aus einer Mehrzahl verfügbarer Puffer 46-50, also entweder aus dem "Eingangsbereich lokal" 54 oder "Eingangsbereich extern" 58, entsprechend einer Dauer, für die der ausgewählte Puffer 46-50 den jeweiligen Status innehatte, wird in der Datenstruktur zunächst diejenige Position, die die maximale Dauer kodiert, frei, so dass nachfolgend, für eine korrekte Aufnahme weiterer Puffer 46-50, wenn diese ihren Zustand wechseln, die bisherigen Puffer 46-50 mit diesem Status in Richtung auf diejenige Position, die die maximale Dauer kodiert, vorgeschoben werden (vgl. FIG 6; siehe dort insbesondere den gestrichelten vertikalen Pfeil).

Für eine einfache Bezugnahme sind die einzelnen Stati als "F", "U", "N" und "D" und Positionen in dafür vorgehaltenen Datenstrukturen mit "1", "2" und "3" bezeichnet.

Übertragen auf die in FIG 3 dargestellte Situation bedeutet dies, dass für in einem Buszyklus 44 nicht vollständig empfangene Daten ein zusätzlicher Puffer 46-50 den Status "Eingangsbereich lokal" 54 oder "Eingangsbereich extern" 58 annimmt. Selbst wenn die Daten noch nicht gelesen oder geschrieben ("lokal" 52 bzw. "extern" 56) wurden, steht für die Ein- oder Ausgangsseite, also Verarbeitungseinheit 22 oder Busanschluss 24, immer ein Puffer 46-50 zur Verfügung, dem der Status "Eingangsbereich lokal" 54 oder "Eingangsbereich extern" 58 zugewiesen werden kann. Wenn eine Verarbeitung der in dem jeweiligen Puffer 46-50 enthaltenen Daten noch nicht erfolgen kann, können auch mehrere Puffer 46-50 dem ein- oder ausgehenden Eingangsbereich ("Eingangsbereich lokal" 54 bzw. "Eingangsbereich extern" 58) zugewiesen werden und zwar im Extremfall sämtliche von dem Pufferspeicher 26 umfassten Puffer 46-50, also drei Puffer 46-50.

Damit lässt sich die Erfindung kurz wie folgt darstellen: Es wird ein Verfahren zur Zuteilung eines zumindest drei Puffer 46, 48, 50 umfassenden Pufferspeichers 26 einer Baugruppe 14-16 mit einer Verarbeitungseinheit 22 und einem Busanschluss 24, wobei die Baugruppe 14-16 über den Busanschluss 24 Daten sendet oder empfängt sowie durch die Verarbeitungseinheit 22 Daten zum Senden über den Busanschluss 24 generiert und über den Busanschluss 24 empfangene Daten verarbeitet, mithin also Busanschluss 24 einerseits und Verarbeitungseinheit 22 andererseits als Produzent bzw. Konsument in einer über den Pufferspeicher 26 abgewickelten Kommunikationsbeziehung fungieren, wobei jeder Puffer 46, 48, 50 einen von vier Stati - "Eingangsbereich lokal" 54, "lokal" 52, "Eingangsbereich extern" 58 und "extern" 56 - annehmen kann, wobei entweder Busanschluss 24 oder Verarbeitungseinheit 22 versuchen, einen der drei Puffer 28-30 durch folgende Strategie zu belegen, wenn bereits einer der drei Puffer 28-30 zugeteilt ist, wird dieser Puffer 28-30 verwendet, ansonsten wird einer derjenigen Puffer 28-30, die den Status "Eingangsbereich extern" 58 bzw. "Eingangsbereich lokal" 54 haben, verwendet und dem betreffenden Puffer 28-30 dazu der Zustand "extern" 56 bzw. "lokal" 52 zugewiesen.

## Patentansprüche

1. Verfahren zur Zuteilung eines zumindest drei Puffer (46, 48, 50) umfassenden Pufferspeichers (26) einer Baugruppe (14-16) mit einer Verarbeitungseinheit (22) und einem Busanschluss (24),
- wobei die Baugruppe (14-16) über den Busanschluss (24) Daten sendet oder empfängt sowie durch die Verarbeitungseinheit (22) Daten zum Senden über den Busanschluss (24) generiert und über den Busanschluss (24) empfangene Daten verarbeitet, mithin also Busanschluss (24) einerseits und Verarbeitungseinheit (22) andererseits als Produzent bzw. Konsument in einer über den Pufferspeicher (26) abgewickelten Kommunikationsbeziehung fungieren,
**dadurch gekennzeichnet,**
- **dass** jeder Puffer (46, 48, 50) einen von vier Stati - "Eingangsbereich lokal" (54), "lokal" (52), "Eingangsbereich extern" (58) und "extern" (56) - annehmen kann und
- **dass** entweder Busanschluss (24) oder Verarbeitungseinheit (22) versuchen, einen der drei Puffer (28-30) durch folgende Strategie zu belegen:
- wenn bereits einer der drei Puffer (28-30) zugeteilt ist, wird dieser Puffer (28-30) verwendet,
- ansonsten wird einer derjenigen Puffer (28-30), die den Status "Eingangsbereich extern" (58) bzw. "Eingangsbereich lokal" (54) haben, verwendet und dem betreffenden Puffer (28-30) dazu der Zustand "extern" (56) bzw. "lokal" (52) zugewiesen.

2. Verfahren nach Anspruch 1, wobei genau ein Puffer (28-30) den Zustand "lokal" 52, genau ein Puffer (28-30) den Zustand "extern" 56 und maximal drei Puffer (28-30) den Zustand "Eingangsbereich lokal" (54) und ebenfalls maximal drei Puffer den Zustand "Eingangsbereich extern" (58) annehmen können.

3. Verfahren nach Anspruch 1 oder 2, wobei im Anschluss an eine Belegung eines der drei Puffer (28-30) durch entweder Busanschluss (24) oder Verarbeitungseinheit (22) dem betreffenden Puffer (28-30) der Zustand "Eingangsbereich lokal" (54) bzw. "Eingangsbereich extern" (58) zugewiesen wird.

4. Verfahren nach Anspruch 1, 2 oder 3, wobei bei einer Verwendung eines Puffers (28-30), der den Status "Eingangsbereich extern" (58) oder "Eingangsbereich lokal" (54) hat, im Falle einer Mehrzahl verwendbarer Puffer (28-30) mit diesem Status derjenige Puffer (28-30) verwendet wird, der diesen Status am längsten innehat.

5. Verfahren nach Anspruch 1, 2, 3 oder 4, wobei Busanschluss (24) oder Verarbeitungseinheit (22), wenn kein Puffer (28-30) mit dem Status "Eingangsbereich extern" (58) bzw. "Eingangsbereich lokal" (54) zur Verfügung steht, einen Puffer mit dem Status "Eingangsbereich lokal" (54) bzw. "Eingangsbereich extern" (58) belegen und zwar dort denjenigen Puffer, der diesen Status die kürzeste Zeit innehat.

6. Verfahren nach Anspruch 4 oder 5, wobei zur Erkennung, welcher Puffer (28-30) einen bestimmten Status am längsten oder am kürzesten innehat zur Verwaltung der maximal drei Puffer (28-30) mit dem Status "Eingangsbereich lokal" (54) oder "Eingangsbereich extern" (58) eine Datenstruktur vorgesehen ist, mit der eine solche Dauer durch eine Position in der Datenstruktur kodierbar ist.

7. Verfahren nach Anspruch 3 und Anspruch 6, wobei im Anschluss an die Belegung eines Puffers (28-30) durch entweder Busanschaltung (24) oder Verarbeitungseinheit (22) dem betreffenden Puffer (28-30) der Zustand "Eingangsbereich lokal" (54) bzw. "Eingangsbereich extern" (58) zugewiesen und in der Datenstruktur an einer letzten freien Position eingetragen wird.

8. Computerprogramm mit durch einen Computer ausführbaren Programmcodeanweisungen zur Implementierung des Verfahrens nach einem der Ansprüche 1 bis 7 wenn das Computerprogramm auf einem Computer ausgeführt wird.

9. Speichermedium mit einem durch einen Computer ausführbaren Computerprogramm gemäß Anspruch 8.

10. Computersystem auf dem ein Computerprogramm nach Anspruch 8 geladen ist.

## Claims

1. Method for the allocation of a buffer memory (26) of a module (14-16) comprising at least three buffers (46, 48, 50) with a processing unit (22) and a bus connection (24),
- wherein the module (14-16) sends or receives data via the bus connection (24) and uses the processing unit (22) to generate data for transmission via the bus connection (24) and process data received via the bus connection (24), therefore the bus connection (24) on the one hand and the processing unit (22) on the other function as a producer or consumer in a communication relationship established via the buffer memory (26),
**characterised in that**
- each buffer (46, 48, 50) can assume one of four statuses - "input area local" (54), "local" (52), "input area external" (58) and "external" (56) and
- either the bus connection (24) or the processing unit (22) attempts to reserve one of the three buffers (28-30) by means of the following strategy:
- if one of the three buffers (28-30) is already allocated, this buffer (28-30) is used,
- otherwise, one of the buffers (28-30) with the status "input area external" (58) or "input area local" (54) is used and for this the relevant buffer (28-30) is assigned the status "external" (56) or "local" (52).

2. Method according to claim 1, wherein exactly one buffer (28-30) can assume the status "local" 52, exactly one buffer (28-30) can assume the status "external" 56 and a maximum of three buffers (28-30) can assume the status "input area local" (54) and similarly a maximum of three buffers can assume the status "input area external" (58).

3. Method according to claim 1 or 2, wherein following a reservation of one of the three buffers (28-30) by either the bus connection (24) or the processing unit (22), the relevant buffer (28-30) is assigned the status "input area local" (54) or "input area external" (58).

4. Method according to claim 1, 2 or 3, wherein during the use of a buffer (28-30) with the status "input area external" (58) or "input area local" (54), in the case of a plurality of usable buses (28-30) with this status, the buffer (28-30) which has held this status for the longest time is used.

5. Method according to claim 1, 2, 3 or 4, wherein, if no buffer (28-30) with the status "input area external" (58) or "input area local" (54) is available, the bus connection (24) or the processing unit (22) reserve a buffer with the status "input area local" (54) or "input area external" (58) and to be precise the buffer which has held this status for the shortest time.

6. Method according to claim 4 or 5, wherein in order to identify which buffer (28-30) has held a specific status for the longest time or for the shortest time for managing the maximum three buffers (28-30) with the status "input area local" (54) or "input area external" (58), a data structure is provided with which a duration of this kind can be encoded by a position in the data structure.

7. Method according to claim 3 and claim 6, wherein following the reservation of a buffer (28-30) by either the bus interface (24) or the processing unit (22), the relevant buffer (28-30) is assigned the status "input area local" (54) or "input area external" (58) and entered in the data structure at a last free position.

8. Computer program with program code instructions that may be executed by a computer for the implementation of the method according to any one of claims 1 to 7 if the computer program is executed on a computer.

9. Storage medium with a computer program that may be executed by a computer according to claim 8.

10. Computer system onto which a computer program according to claim 8 is loaded.

## Revendications

1. Procédé d'affectation d'une mémoire ( 26 ) tampon, comprenant au moins trois tampons ( 46, 48, 50 ) d'un module ( 14 à 16 ) ayant une unité ( 22 ) de traitement de données et une connexion ( 24 ) de bus,
- dans lequel le module ( 14 à 16 ) envoie ou reçoit des données par l'intermédiaire de la connexion ( 24 ) de bus, ainsi que produit par l'unité ( 22 ) de traitement des données à envoyer par la connexion ( 24 ) de bus et traite les données reçues par la connexion ( 24 ) de bus, la connexion ( 24 ) de bus, d'une part, et l'unité ( 22 ) de traitement, d'autre part, servant par conséquent de producteur et de consommateur dans un rapport de communication développé par l'intermédiaire de la mémoire ( 26 ) tampon,
**caractérisé**
- **en ce que** chaque tampon ( 46, 48, 50 ) peut prendre l'un des quatre états - "local zone d'entrée" ( 54 ), "local" ( 52 ), "extérieur zone d'entrée" ( 58 ) et "extérieur" ( 56 ) et
- **en ce que** soit la connexion ( 24 ) de bus, soit l'unité ( 22 ) de traitement, cherche à occuper l'un des trois tampons ( 28 à 30 ) par la stratégie suivante :
- si l'un des trois tampons ( 28 à 30 ) est déjà affecté, ce tampon ( 28 à 30 ) est utilisé,
- sinon l'un des tampons (28 à 30), qui ont l'état "extérieur zone d'entrée" ( 58 ) ou "local zone d'entrée" ( 54 ), est utilisé et à cet effet l'état "extérieur" ( 56 ) ou "local" ( 52 ) est affecté au tampon ( 28 à 30 ) concerné.

2. Procédé suivant la revendication 1, dans lequel exactement un tampon ( 28 à 30 ) peut prendre l'état "local" ( 52 ), exactement un tampon ( 28 à 30 ) peut prendre l'état "extérieur" ( 58 ) et au maximum trois tampons ( 28 à 30 ) peuvent prendre l'état "local zone d'entrée" ( 54 ) et également au maximum trois tampons peuvent prendre l'état "extérieur zone d'entrée" ( 58 ).

3. Procédé suivant la revendication 1 ou 2, dans lequel, à la suite d'une occupation de l'un des trois tampons ( 28 à 30 ), l'état "local zone d'entrée" ( 54 ) ou "extérieur zone d'entrée ( 58 ) est affecté au tampon ( 28 à 30 ) concerné par la connexion ( 24 ) de bus ou par l'unité ( 22 ) de traitement.

4. Procédé suivant la revendication 1, 2 ou 3, dans lequel lors d'une utilisation d'un tampon ( 28 à 30 ), qui a le statut "extérieur zone d'entrée" ( 58 ) ou "local zone d'entrée" ( 54 ), on utilise, dans le cas d'une multiplicité de tampons ( 28 à 30 ) utilisables ayant ce statut, le tampon ( 28 à 30 ) qui possède ce statut le plus longtemps.

5. Procédé suivant la revendication 1, 2, 3 ou 4, dans lequel la connexion ( 24 ) de bus ou l'unité ( 22 ) de traitement occupe, lorsqu'un tampon ( 28 à 30 ) ayant le statut "extérieur zone d'entrée" ( 58 ) ou "local zone d'entrée" ( 54 ) est à disposition, un tampon ayant le statut "local zone d'entrée" ( 54 ) ou "extérieur zone d'entrée" ( 58 ) et de fait le tampon qui y possède ce statut pendant le temps le plus court.

6. Procédé suivant la revendication 4 ou 5, dans lequel pour identifier le tampon ( 28 à 30 ), qui possède un certain statut le plus long ou le plus court pour la gestion des au maximum trois tampons ( 28 à 30 ) ayant le statut "local zone d'entrée" ( 54 ) ou "extérieur zone d'entrée" ( 58 ), il est prévu une structure de données, par laquelle une donnée de ce genre peut être codée par une position dans la structure de données.

7. Procédé suivant la revendication 3 et la revendication 6, dans lequel, à la suite de l'occupation d'un tampon ( 28 à 30 ) l'état "local zone d'entrée" ( 54 ) ou "extérieur zone d'entrée" ( 58 ) est affecté, par la connexion ( 24 ) de bus ou par l'unité ( 22 ) de traitement, au tampon ( 28 à 30 ) concerné et est porté dans la structure de données à une dernière position libre.

8. Programme informatique comprenant des instructions de code de programme pouvant être réalisées par un ordinateur pour la mise en oeuvre du procédé suivant l'une des revendications 1 à 7, lorsque le programme informatique est réalisé sur un ordinateur.

9. Support de mémoire ayant un programme informatique pouvant être réalisé par un ordinateur suivant la revendication 8.

10. Système d'ordinateur sur lequel un programme informatique suivant la revendication 8 est chargé.
